# FASCICULE DE BREVET EUROPEEN

(11) **EP 3 393 889 B1**
(45) Date de publication et mention de la délivrance du brevet: **14.09.2022**
(21) Numéro de dépôt: 16834045.3
(22) Date de dépôt: 21.12.2016
(51) Int. Cl.: B62D 21/16, B62D 29/04, B62D 31/00, B62D 63/02

(54) **ARCHITECTURE DE VEHICULE**
FAHRZEUGARCHITEKTUR
VEHICLE ARCHITECTURE

(30) Priorité: 24.12.2015 WO PCT/IB2015/059980
(43) Date de publication de la demande: 31.10.2018
(73) Titulaire: Softcar SA, 1700 Fribourg (CH)
(72) Inventeur: THULIEZ, Jean-Luc, 2525 Le Landeron (CH); CROZIER, Etienne, 2520 La Neuveville (CH)
(74) Mandataire: Grosfillier, Philippe
(86) Numéro de dépôt international: PCT/IB2016/057888
(87) Numéro de publication internationale: WO 2017/109726

(56) Documents cités:
- EP-A1- 2 431 259
- EP-A2- 0 930 220
- WO-A1-97/15484
- WO-A1-98/32622
- DE-A1- 19 926 607
- DE-A1- 19 963 068
- DE-A1-102009 038 834
- JP-A- S61 166 776

## Description

### DOMAINE TECHNIQUE

La présente invention concerne l'architecture d'un véhicule à faible empreinte écologique.

### TECHNIQUE ANTERIEURE

Les premières automobiles étaient entièrement en bois, sur le même principe que le carrosse. Le châssis était en général la seule structure rigide, et l'habitacle était ajouté au-dessus. Dans les années 1910. Les châssis d'abord, puis les carrosseries furent réalisées en acier. Initiée dans les années 1935, le châssis coque en tôle d'acier permet de réaliser une auto à la fois plus solide et plus légère. La rigidité du châssis est obtenue en utilisant le volume de la coque complète comme moment d"inertie

Le châssis est intégré à la coque. La coque ainsi assemblée permet une rigidité torsionelle élevée par rapport à la masse. La coque reprend les efforts renvoyés par les liaisons le sol et les suspensions et amortisseurs.

Le châssis coque est fabriqué à partir de tôles qui arrivent sous forme de bobines dans l'usine automobile. Les bobines sont déroulées, nettoyées, puis cisaillées sur des lignes de découpe. Les déchets de tôle sont évacués et les flans obtenus sont stockés et transporté aux pieds des presses d'emboutissage. Les flans sont décapés, puis huilés spécialement avant d'être embouties.

Après l'emboutissage, les pièces sont de nouveau décapées avant d'être transférées dans l'atelier tôlerie ou ouvriers et robots vont réaliser environ 4' 000 points de soudures par châssis - coque métal. La coque obtenue est ensuite plongée dans un bain de cataphorèse. La caisse passe par une phase de masticage destinée à boucher les espaces entre les feuillures de tôle afin d'éviter qu'elles ne vibrent. Le masticage est nécessaire pour assurer l'étanchéité et ainsi protéger l'assemblage de la corrosion.

A noter que le mastic employé est un thermodurcissable souple, non recyclable. La caisse est ensuite poncée, nettoyée, les couches de peintures sont appliquées, en général au nombre de 4. La dernière couche étant un vernis polymère donnant le brillant final du véhicule.

Un nouveau style de véhicule, nécessite un assemblage comprenant en général entre 300 à 400 pièces embouties pour obtenir la forme complexe tridimensionnelle. La tôle présentant une plasticité très faible ne peut être mise en forme que sur des formes limitées. C'est une des raisons pour laquelle les véhicules actuels se ressemblent tous actuellement.

Chacune des pièces embouties nécessite trois à quatre outillages d'ébauche, de semi-finition ou de finition.

L'investissement avant de pouvoir produire un nouveau modèle correspond à l'ensemble des pièces multiplié par le nombre d'outillages d'emboutissage. Les pièces de tôleries sont liées au style véhicule et rarement standard d'un modèle de véhicule a l'autre. Les châssis coques sont donc différent à chaque modèle et chaque pièce tôle nécessite un jeu d'outillage d'emboutissage spécifique. De ce fait, le châssis coque nécessite sur chaque nouveau modèle de style un investissement spécifique très élevé, qui ne peut être réutilisé sur le suivant.

La production d'un châssis coque métal nécessite obligatoirement des infrastructures importantes pour l'atelier d'emboutissage, comprenant des presses d'emboutissage, des tapis de récupération des déchets de tôle, des robots transférant les pièces embouties d'une presse à la suivante, pour le soudage par point des pièces par des robots dans les usines modernes. Le châssis-coque assemblée passe ensuite dans un bain de protection de cataphorèse, puis dans les installations de peinture et de séchage. L'investissement financier lié à la transformation de la tôle métallique est à ce stade est déjà très important.

Le châssis coque ainsi réalisé est ensuite délicatement transporté en bout de ligne d'assemblage, si possible sur le même site.

Le châssis coque étant la pièce la plus volumineuse du véhicule, il impose la configuration du reste de la production, qui consiste en une ligne d'assemblage linéaire sur laquelle les composants sont assemblées séquentiellement, la coque avançant poste après poste. Ainsi sont assemblé à la coque le poste de conduite, l'habillage, la miroiterie, les trains roulants, le tableau de bord, les sièges, les isolations acoustiques, moquettes, plafonnier, les ouvrants, les pare chocs, les phares, les feux, le moteur, les sièges et toutes les fonctions jusqu' au poste de control qualité en bout de ligne ou sort la voiture finale. Entre la bobine d'acier du départ et la sortie du véhicule, l'auto aura parcouru environ 8 kms dont de 1 à 2 uniquement sur la seule ligne d'assemblage. Ce mode de production de châssis coque basé sur l'optimisation de l'acier nécessite un triple investissement d'infrastructure pour la fabrication des châssis coques, pour la fabrication d'un nouveau modèle spécifique, et pour une ligne d'assemblage. Les trois investissements ensembles doivent tous être opérationnels simultanément avant de pouvoir sortir le premier véhicule d'une usine automobile.

La fabrication d'un châssis coque a un impact écologique important car elle utilise des matériaux lourds à transporter, difficiles à transformer comme le feuillard de tôle qui nécessitent énormément d'énergie pour être mis en forme et rejette des déchets toxiques, notamment pour le traitement anticorrosion des tôles. Le travail dans les ateliers de tôlerie est difficile pour les ouvriers, très bruyant, sale. Les tôles déroulées à l'entrée de la ligne d'étampage doivent d'abord être nettoyées et désoxydées, avant d'être lubrifiée pour les opérations d'emboutissage. Après ces opérations, l'huile doit être entièrement enlevée au solvant pour permettre un bon soudage et peinture. En fin de ligne de ferrage, les tôles doivent être alignées et les jeux ajustés. Les de découpe des flans dans les tôles sont collectés et transportés en retour vers les hauts fourneaux. Ils contiennent un taux trop élevé de silicium pour pouvoir être employés à nouveau dans l'automobile. Les matériaux employés pour l'isolation acoustique des tôles sont dans peu de cas recyclables, et dans le cas du polyuréthane toxiques et non dégradables. Le marché souhaitant des véhicules de plus en plus silencieux, les véhicules comportent toujours plus d'isolants.

Le véhicule terminé et contrôlé est alors envoyé au stockage sur un parking où il attend son transport vers sa destination finale, qui peut être situé de l'autre côté de la planète.

Sur le véhicule final, le châssis coque introduit d'autres problématiques tel que les feuillures de tôles déchirées après un crash, qui peuvent dans certains cas remonter dans l'habitacle et provoquer des coupures et lésions aux passagers.

Une autre problématique quand la tôle est de l'acier est que celui-ci contient du fer, et passée la protection superficielle, la caisse du véhicule s'oxyde. Cela est d'autant plus rapide que le véhicule se trouve proche de la mer et des brouillards salins ou roule sur du sel l'hiver. A un certain niveau d'oxydation de la caisse, le véhicule doit être retiré de la circulation car la tôle composant la structure est oxydée, peut se rompre et il devient dangereux.

Ces traitements, les types de matériaux utilisés, les techniques de montage employées ainsi que le nombre important de matériaux et de pièces le constituant rendent enfin le démontage difficile et le recyclage difficile en fin de vie. Un tableau de bord contient plus de 300 matériaux diffèrent, certaines pièces pèsent seulement quelques grammes.

Pour augmenter l'efficacité énergétique d'un véhicule écologique et limiter sa résistance à l'avancement, celui-ci doit être de faible masse. L'acier et même l'aluminium ont une densité trop élevée pour permettre de réaliser une structure légère sur un châssis coque. Ajouter à la batterie de propulsion d'un véhicule électrique, la masse devient trop élevée et rend le véhicule ainsi conçu peu attrayant par de faibles performances notamment en autonomie.

Le châssis coque est pourtant le modèle universel utilisé par l'automobile depuis 74 années et la plupart des véhicules à propulsion électrique de série utilisent ce principe

Les Supercars réalisées en composites époxy carbone sont ultra légères, mais l'époxyde carbone des est de plus en plus interdit à la transformation pour des raisons de toxicité , a l' utilisation car il fragmente en crash, et surtout il n'est pas recyclable. Les couts de transformation élevée ne sont pas compatibles avec un véhicule fabriqué en grande série, et limite l'utilisation des composites a des véhicules haut de gammes, de compétition et peu écologiques

La publication WO 98/32622 décrit un véhicule modulaire ayant une section avant, une section centrale et une section arrière.

La publication DE 10 2009 038 834 décrit un véhicule ayant un module avant, un module central et un module arrière.

### Exposé de l'invention

La présente invention permet de pallier l'ensemble des inconvénients mentionnés ci-dessus. Elle permet de réaliser un véhicule de grande série à 4 roues à propulsion électrique, homologué pour la circulation.

L'invention concerne donc une architecture de véhicule telle que définie dans la revendication 1.

Comme les premiers véhicules du siècle dernier, le châssis est de type plateforme. Il est mécaniquement assez rigide pour reprendre tous les efforts dynamiques du véhicule roulant. Il comprend la propulsion, liaisons au sol, direction, sièges, absorbeur d'énergie avant, arrière et latéraux. Le châssis reprend entièrement les forces envoyées par les amortisseurs et suspension Le châssis assemblé est un module indépendant de la coque et il peut rouler indépendamment de celle-ci.

Le châssis est l'assemblage de 3 modules; le module central plateforme contenant la batterie dans le cas favorable d'un véhicule à propulsion électrique, le module suspension avant comprenant la propulsion, le module suspension arrière.

La coque est constituée principalement de 2 à 3 grandes pièces bio-polymères moulées en corps creux et présentant une peau intérieure formant l'habitacle et une peau extérieure formant le style extérieur du véhicule.

L'invention permet de réaliser une coque, composée de grandes pièces intégrant un grand nombre de fonctions, réduisant ainsi le nombre total de pièces composant le véhicule et rendant l'assemblage simple, rapide, et sans outil spécifique. Les ateliers de ferrage, nettoyage, étampage, soudage, galvanoplastie, peinture, finition ne sont plus nécessaires. N'étant pas structurelle, mais souple, elle permet la réalisation de multiples styles sur une même plateforme-propulsion réduisant ainsi l'investissement. A la conception le styliste n'est plus limité par les caractéristiques de déformation de l'acier en emboutissage et peut exprimer son talent en toute liberté pour dessiner sa sculpture véhicule.

A la production, les pièces de carrosserie sont réalisées en matériaux polymères ou avantageusement bio-polymère possédant un faible impact écologique et peu énergivores à mettre en forme. Les procédés de rotomoulage ou de roto-moussage utilisés pour cette mise en forme permettent de réaliser des parties compactes et des parties moussées possédant des épaisseurs différentes sur une même pièce. Aucun traitement anticorrosion n'est nécessaire ni aucune opération de peinture puisque les colorants sont ajoutés à la matière de base avant la mise en forme. Toute la matière présente au début du processus de moulage se retrouve dans la pièce finie.

L'invention permet de produire un véhicule plus écologique pour les raisons suivantes :
A la fabrication, l'architecture du véhicule comporte environ 20 fois moins de pièces qu'une production classique à base de châssis coque métal. Moins de pièces demandent moins de transport et permettent ainsi de réduire l'énergie grise contenue dans le véhicule.

Les pièces de carrosserie sont teintées dans la masse ce qui réduit l'énergie nécessaire à la peinture, mais aussi aux opérations de réparation de carrosserie sur les chocs de parking.

Enfin le polymère utilisé pour la carrosserie contient lui-même peu d'énergie à sa fabrication dans le réacteur et à sa transformation.

La voiture ne contient pas de lubrifiants notamment sur les transmissions. Ceci évite une pollution des pièces à recycler.

L'invention permet de limiter à 5 les familles de polymères pour réaliser le véhicule. Ces polymères concentrent dans des grandes pièces permettant leur identification simple et pratique.

Les grandes pièces contiennent une masse intéressante de polymère offrant ainsi une valeur marché favorisant leur reprise. Le démontage des pièces de carrosserie est simplifié et permet d'obtenir de grande masse d'un seul et unique polymère.

Les grandes pièces de carrosserie sont conçues dans un unique polymère ou plus favorablement un bio-polymère rendant l'identification et les boucle de recyclage efficace.

L'invention comprend un concept de production modulaire de l'ensemble du véhicule. Les usines de production sont des centres d' assemblage des 4 modules nécessaire à un véhicule.

Un faisceau de fournisseurs sous-traitants fabrique les 4 modules : module carrosserie -ouvrants, module avant propulsion, châssis suspension avant, module châssis suspension arrière, module plateforme centrale + batterie. Ces fournisseurs envoient en flux tendu ces quatre modules aux centres d'assemblages. Lesdits centres d'assemblages sont localisé proches des mégapoles pour permettre de fabriquer le véhicule au plus proche du client final et éviter le transport du véhicule. Ce principe de production éclaté en 4 modules de faibles encombrements permet de réduire l'énergie grise de transport contenue dans le véhicule final. Les sites d'assemblages proches des villes permettent de collecter les véhicules en fin de vie, ou des éléments de carrosserie pour réaliser une boucle de recyclage. Ce concept de production s'oppose à l'actuel, où une usine centralise la production et où les véhicules terminés sont transportés vers l'utilisateur par train, bateau, camion.

L'invention permet de nombreux avantages tels que réduire le coût de production véhicule, le coût d'industrialisation, le coût d'investissement de production, l'énergie grise de transport des pièces, l'énergie grise du transport du véhicule vers l'utilisateur final, l'empreinte écologique. L'invention permet d'augmenter la durabilité, la sécurité, la modularité, la versatilité et la liberté de dessin dans le style intérieur et extérieur véhicule. A l'utilisation, sa légèreté permet de diminuer la consommation électrique du véhicule en roulage. La conception des pièces du module de carrosserie permet une absorption d'énergie en cas de crash, en étanchéifiant puis en gonflant l'intérieur de ces corps creux fermé souple un instant avant choc. La géométrie des pièces de carrosserie et la constitution de ses paroi, compacte à certains endroits et moussée à d'autres, permet d'absorber de l'énergie en cas de crash, offrant une sécurité optimum aux passagers.

On peut faire une analogie de la carrosserie avec des ballons souples gonflés entourant les passagers.

L'élasticité de surface du polymère lui permet d'avoir une bonne tenue aux chocs parking sans présenter de dégradation. Son montage sur le châssis est simple et rapide. L'utilisateur peut ramener son véhicule au garage pour changer de modèle de carrosserie pour un plus récent. De la même façon, une seule pièce pourra être changée indépendamment des autres. De la même manière, l'invention permet également de changer entièrement le module carrosserie pour permettre un changement de la couleur du véhicule. Ce changement du module de carrosserie se réalise en quelque minutes, tout en conservant les pièces reliées au châssis propulsion et sans frais importants. Enfin la possibilité d'utiliser des matériaux translucides permet un rétro-éclairage et une diffusion de la carrosserie en corps creux pour une signature lumineuse de la voiture le soir ou pendant la nuit.

En fin de vie, le faible nombre de pièces, le peu de matériaux différents utilisés, leur origine biologique, la facilité de désassemblage, permettent un recyclage pratique complet du véhicule. L'architecture bio polymère reprend au plus près l'architecture biologique du vivant, et plus précisément celle des mammifères. Le châssis rigide remplace le squelette et la coque extérieure réalise la fonction de protection du squelette en cas de chocs. Plus largement, l'architecture décrite correspond à une «économie circulaire» (EC) qui décrit une économie industrielle dans laquelle les flux de matériaux continuent à circuler avec une qualité élevée (en ce qui concerne les propriétés, les fonctions et les diverses utilisations) après leur première utilisation, sans que ces matériaux n'entrent dans la biosphère. Le déchet devient ainsi à nouveau matière première. Les pièces peuvent être simplement démontées, sans mélange de matériaux, identifiées, et envoyées à l'usine d'assemblage qui redirigera vers le recyclage. Ce principe, cumulé à des pièces de grands volumes, permet des boucles de recyclage, conformément aux traités sur l'économie circulaire ratifiés par l'Allemagne, la Chine, et la confédération helvétique. Ce concept de boucle de recyclage est le plus haut niveau de recyclage appelé également concept « cradle to cradle ». Le véhicule ainsi conçu devient un vecteur de communication sur l'économie circulaire.

L'architecture permet l'utilisation de matériaux polymères peu sensibles à l'oxydation, et liés à la longévité de la propulsion électrique, ils permettent de réaliser un véhicule particulièrement durable. La carrosserie recevra des chocs et pourra être changée dans le temps, pour un propriétaire souhaitant rénover sa voiture ou la moderniser, avec un nouveau style. Cet ensemble sera monté sur le châssis propulsion original qui pourra être conservé pendant des dizaines d'années

Grâce à cette architecture, le véhicule devient plus léger, plus modulable, plus économique à la fabrication et finalement pour l'utilisateur. L'empreinte carbone laissée par le véhicule est réduite au minimum possible à tous les stades de la fabrication, à la fin de vie, en passant par l'utilisation.

### Description sommaire des dessins

La présente invention et ses avantages apparaîtront mieux dans la description ci-dessous d'un mode de réalisation donné à titre d'exemple non limitatif, en référence aux dessins annexés dans lesquels :

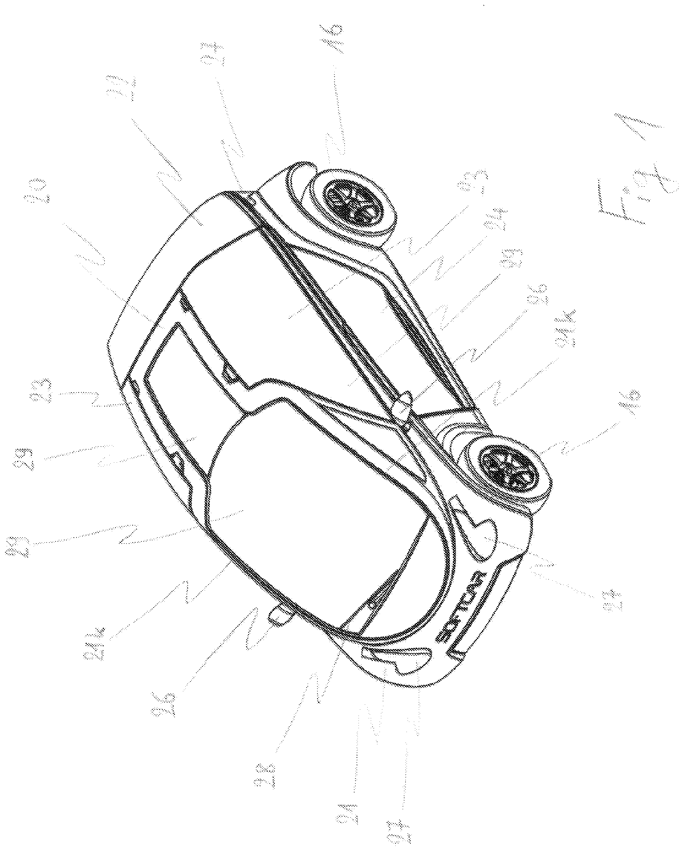

- la figure 1 représente une vue du véhicule complet assemblé,

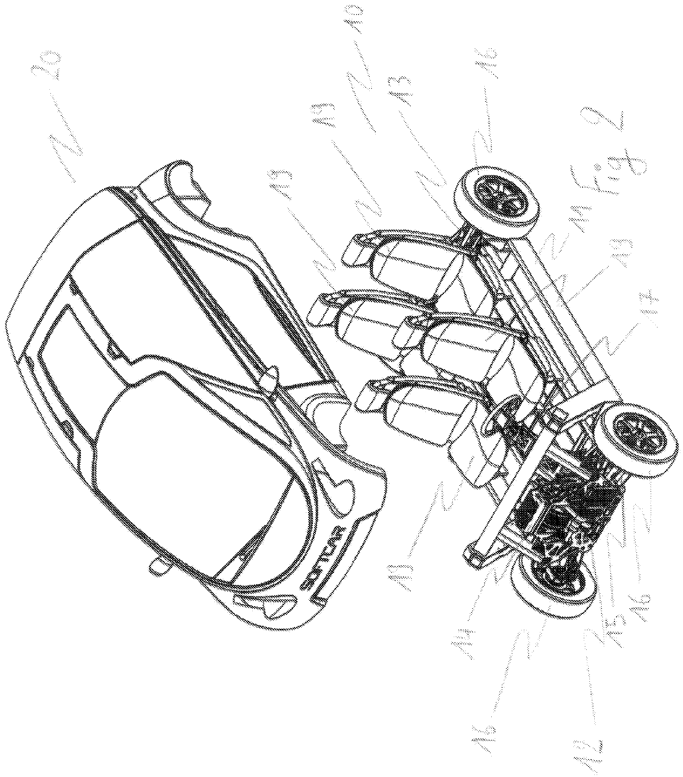

- la figure 2 représente une vue en perspective des 3 modules du châssis assemblé et le quatrième module qui est la coque indépendante,

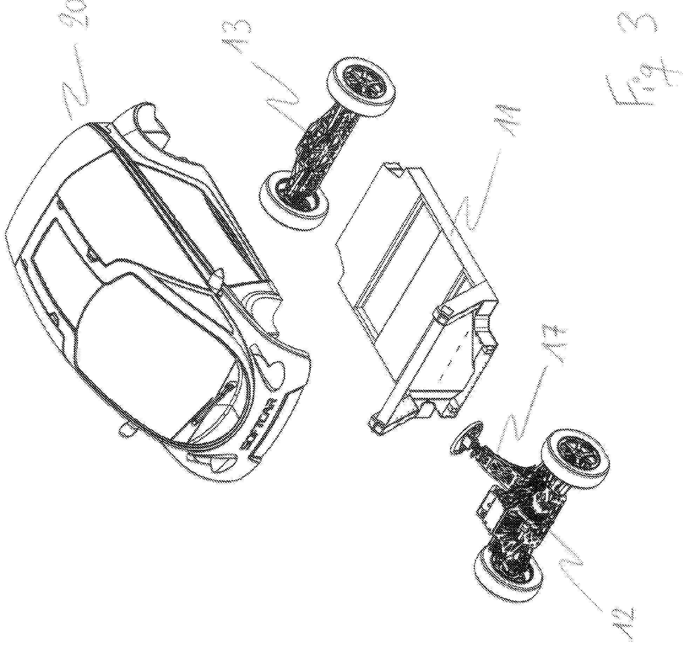

- la figure 3 représente une vue en perspective des 4 modules du véhicule,
- la figure 4 représente une vue en perspective du châssis roulant composé des 3 modules assemblés, selon la première configuration de l'architecture selon la présente invention,

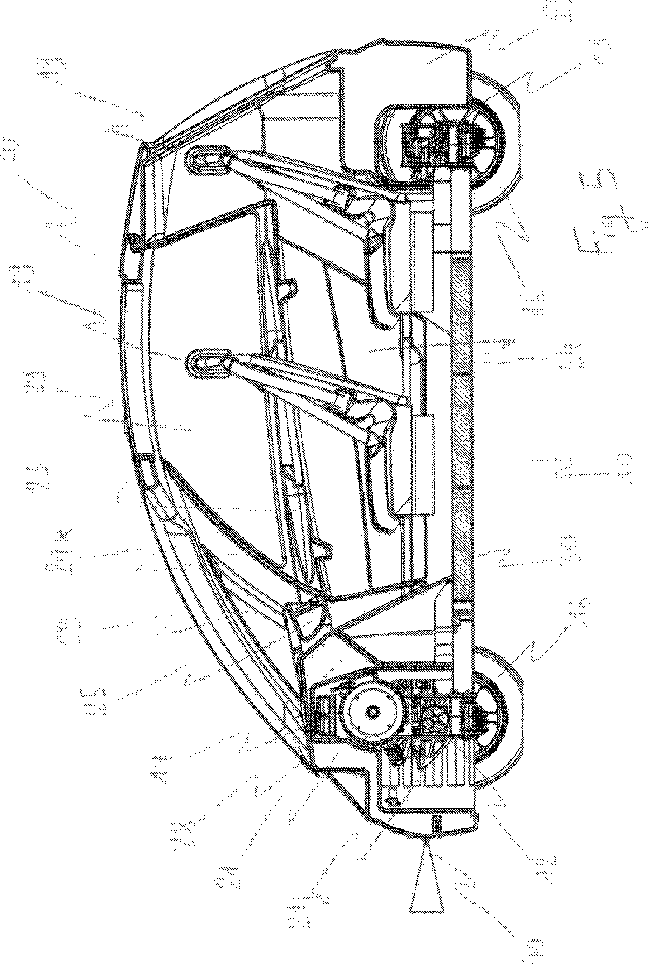

- la figure 5 représente une vue en coupe du véhicule,

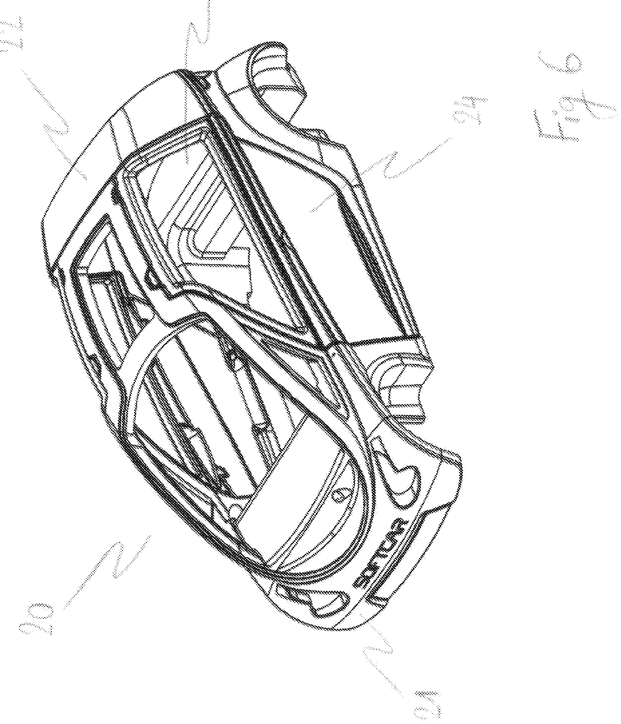

- la figure 6 représente une vue en perspective des pièces en corps creux de la coque en position de montage,

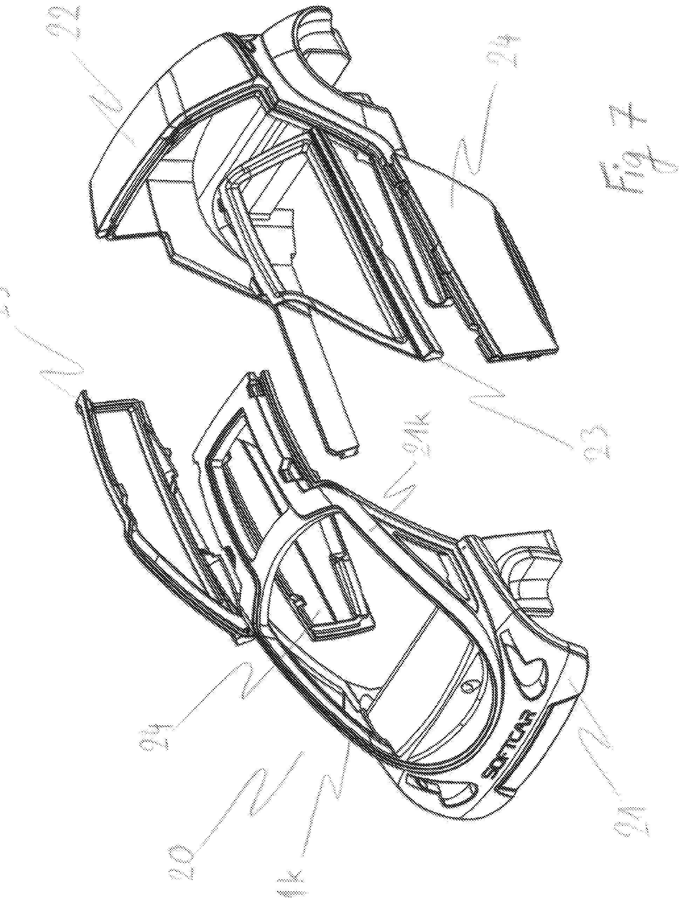

- la figure 7 représente une vue en perspective éclatée des pièces en corps creux de la coque,

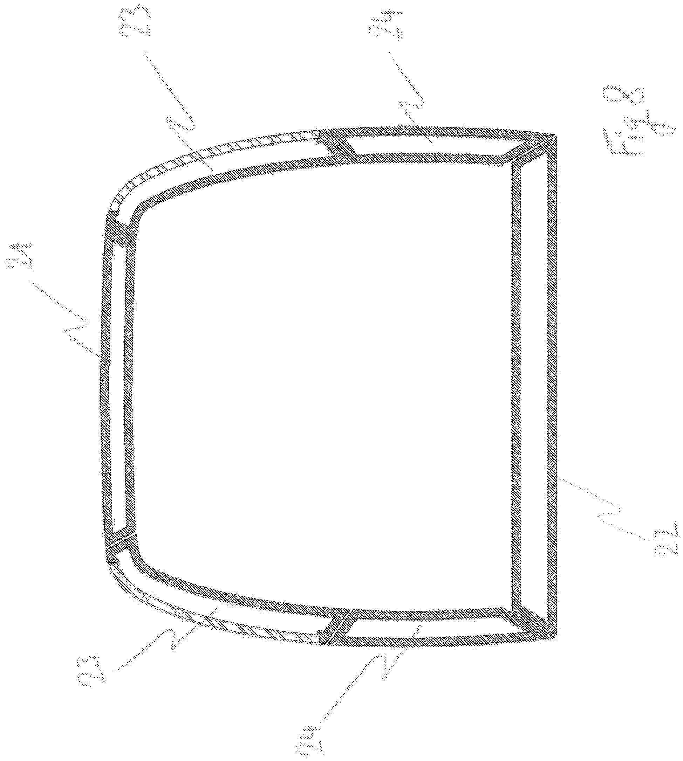

- la figure 8 représente une vue en section des pièces en corps creux de la coque et du châssis,

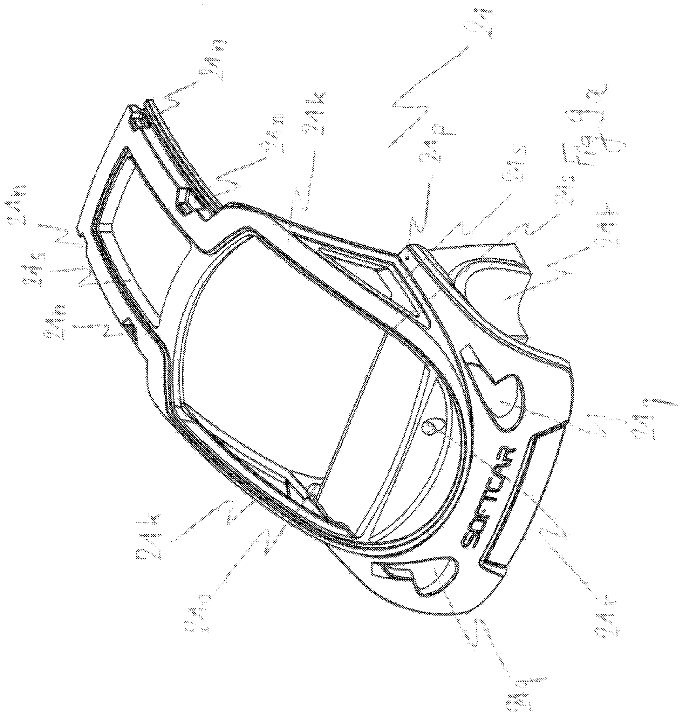

- la figure 9A représente une vue en perspective trois quart avant de la coque avant,

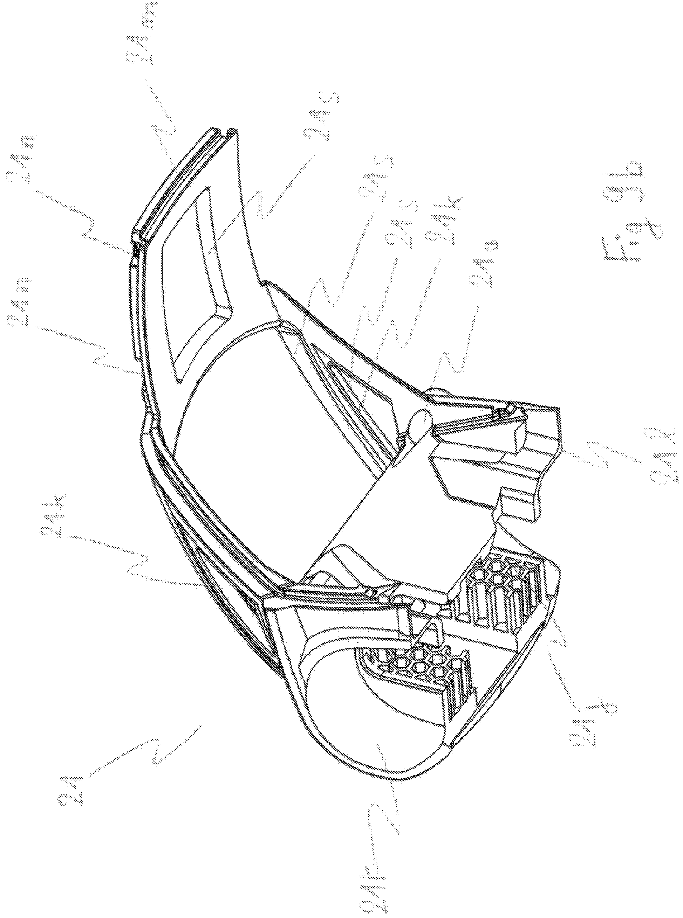

- la figure 9B représente une vue en perspective trois quart arrière de la coque avant,

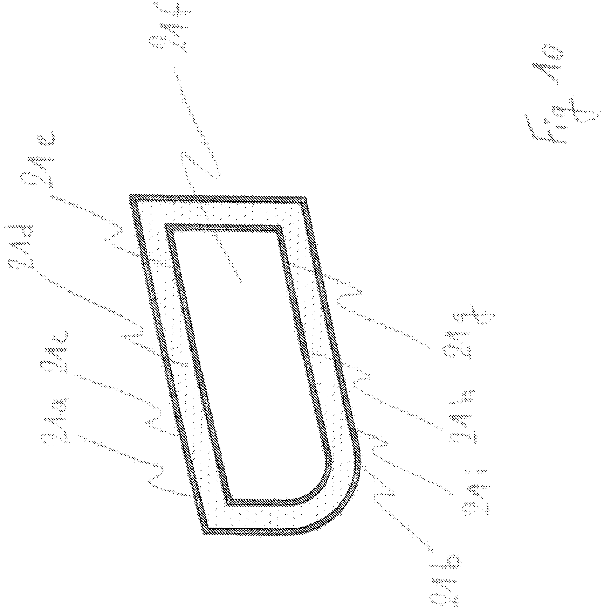

- la figure 10 représente une vue en section du pilier A de la coque,

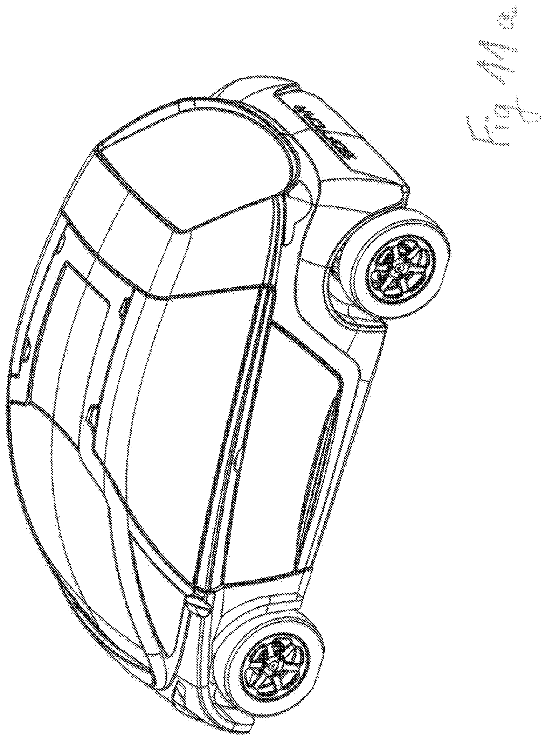

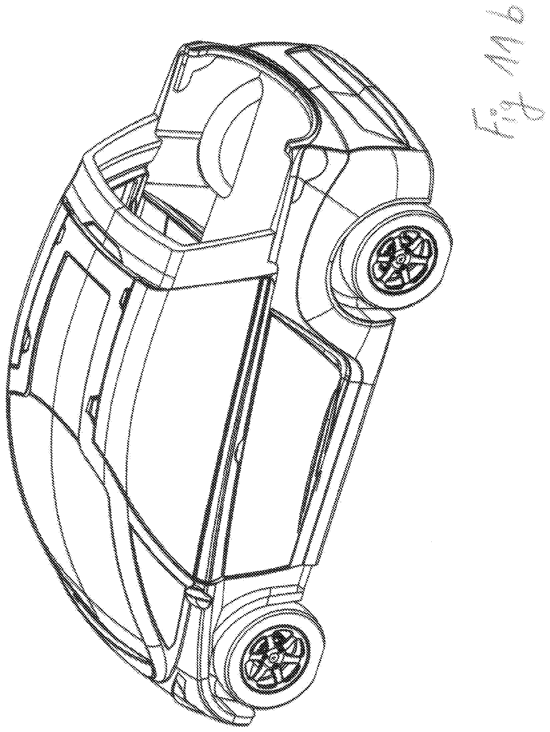

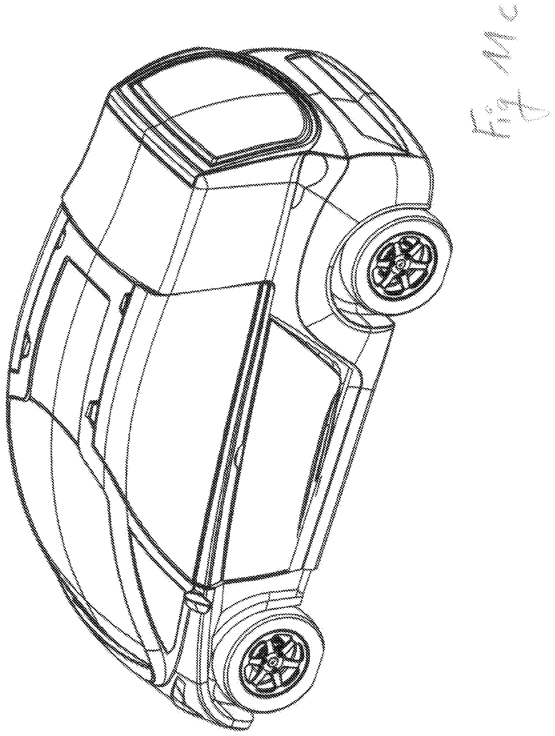

- Les figures 11 A, B, C représentent des vues en perspective de plusieurs véhicules possédant un châssis identique, mais une coque au style différent.
- La figure 12 représente dans une perspective les 4 modules, avec un module 12' qui permet de réaliser une propulsion 4×4, selon la deuxième configuration de l'architecture de la présente invention.

### Meilleure manière de réaliser l'invention

Ce paragraphe décrit la meilleure manière de réaliser l'invention. L'invention ne se limite cependant pas aux formes de réalisation décrites, mais est susceptible d'être modifiée dans le cadre des revendications annexées.

En référence aux figures, le véhicule, homologué pour la circulation, est composé d'un assemblage des 4 modules suivant ; le module avant (12), la plateforme centrale (11), et le module arrière (13). Ces trois modules assemblés forment le châssis plateforme (10) supportant le module de coque (20). Ledit châssis (10) est constitué par l'assemblage de 3 modules : Le module avant (12) est une structure sur laquelle sont montés le moteur électrique, la transmission, les suspensions avant, les amortisseurs, les éléments de direction (17), le pédalier (18). Le module (11), est constitué par la plateforme centrale réalisée favorablement en tube extrudés aluminium qui intègre les batteries (30), le contrôleur moteur (14).Le module (13) arrière comprend les éléments de suspension (15), et les éléments de liaison au sol (16).

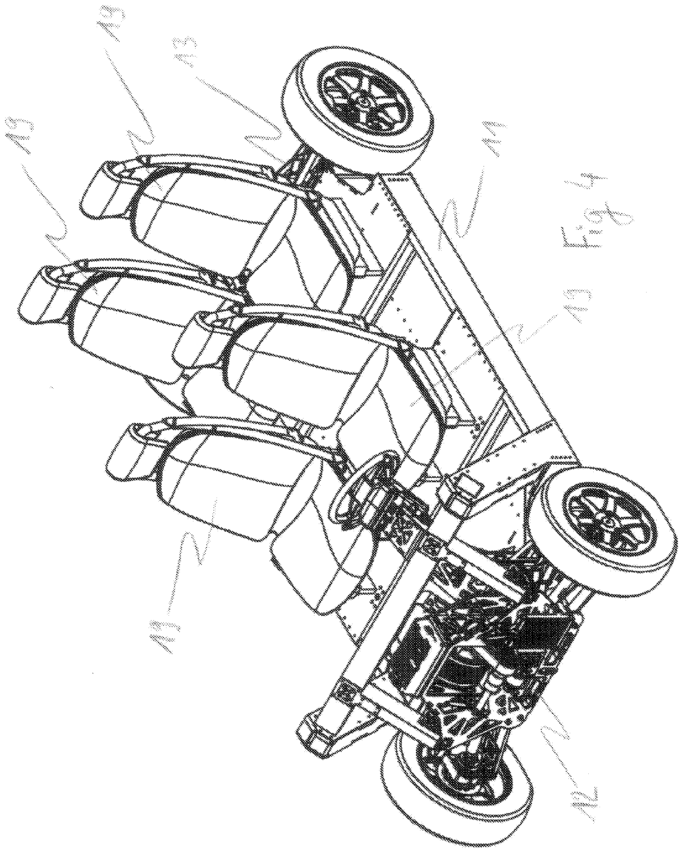

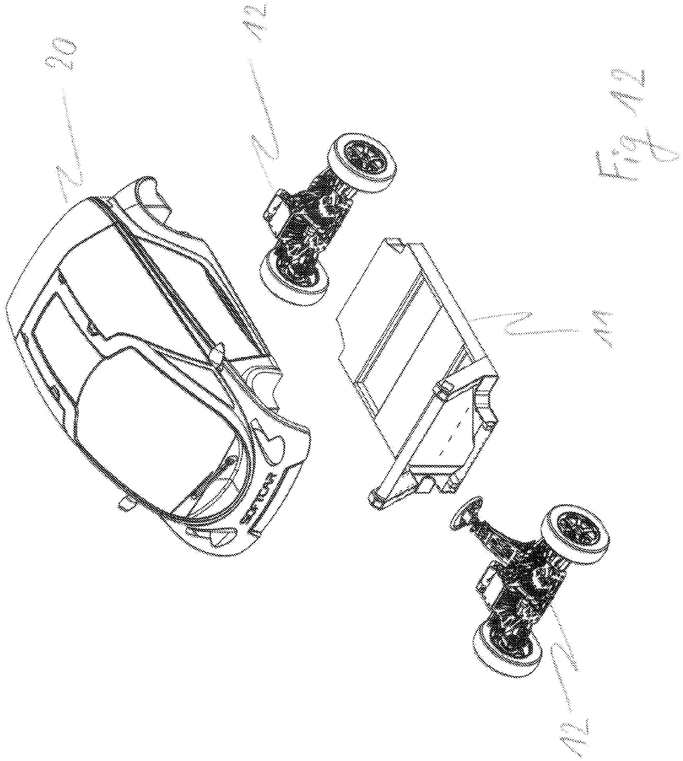

Le châssis représenté sur la (Fig. 4) est le châssis d'un véhicule traction. Ce même châssis peut être monté comme sur la (Fig. 12), où le module avant (12) est assemblé à la plateforme centrale, et où le module (13) est remplacé par un module (12') modifié en enlevant les éléments de direction. Ce châssis formé de l'assemblage des module (12, 11, et 12') a donc deux moteurs, et devient une propulsion 4x4 par une variante d'assemblage de modules. Tous les éléments nécessaires au roulage du véhicule sont présents sur ledit châssis (10), de sorte que le châssis est autonome et roulant. Aucun élément ne ferme la structure au-dessus des sièges, de sorte que tous les éléments sont facilement accessibles, simplifiant le montage dudit châssis (10).

Ladite coque (20) est réalisée en polymère, celui-ci étant de façon avantageuse un bio-polymère bio-sourcés. Les polymères sont dits « bio » lorsqu'ils sont issus entièrement ou partiellement de ressources renouvelables, telles que l'huile de ricin, la betterave, la canne à sucre. Ceci permet à ladite coque (20) d'avoir un faible impact sur l'environnement : les bio-polymères sont moins polluants à produire que les polymères issus de l'industrie pétrolière. Les polymères thermoplastiques permettent après broyage et micronisation de remouler une même pièce dans la même matière ou une autre pièce permettant de multiples utilisations dans d'autres pièces.

La pollution globale est réduite sur le cycle de vie complet de la matière.

Le polymère utilisé peut être favorablement un bio polymère d'acide poly lactique d'abréviation PLA, qui permet une dépolymérisation chimique jusqu' au stade du monomère d'acide lactique, et qui peut être synthétisé ensuite à peu d'énergie pour recréer un polymère nouveau.

Ladite coque (20) est constituée d'un faible nombre de pièces en corps creux autour de l'habitacle, lesdites pièces étant disposées tout autour des passagers formant une enceinte de protection contre les intempéries, le froid, le vent, et les chocs. La fixation de ces grandes pièces est assurée avec des moyens traditionnels favorablement des boulons, à la fois pour un montage, mais aussi pour un démontage rapide dans les cas où l'utilisateur souhaite changer de couleur de véhicule, ou d'une réparation d'un véhicule accidenté ou d'une pièce de la coque, voire toute la coque doit être changée. Les éléments de coque sont démontés du châssis et sont ensuite envoyés au broyage. Après broyage, le polymère peut être utilisé de nouveau pour mouler la même pièce

### Ce démontage est réalisé avec des outils classiques

Selon un mode de réalisation particulier mais non limitatif, la coque (20) est constituée d'une pièce avant (21) encastrée dans le châssis, d'une coque arrière (22) encastrée dans celle-ci et dans le châssis, de parties supérieures de portes (23) reliées à ladite pièce avant (21) au moyen de charnières (23a), de parties inférieures de portes (24) reliées auxdites parties supérieures de portes (23) au moyen de charnières (23b), d'une planche de bord (25), de rétroviseurs (26), d'optiques (27), d'essuie-glaces (28) fixés sur ladite pièce avant (21), et de vitres (29) positionnées sur lesdites coque avant (21), coque arrière (22) et parties supérieures de portes (23) afin d'offrir une vision optimale au conducteur et aux passagers. Le faible nombre de pièces et l'utilisation d'un matériau unique pour produire l'ensemble des pièces de la coque, diminue son impact écologique et facilite le démontage et l'identification des pièces pour favoriser la boucle de recyclage.

Les pièces principales de ladite coque (20), telles que ladite coque avant (21), ladite coque arrière (22), lesdites parties supérieures de portes (23), lesdites parties inférieures de portes (24), ladite planche de bord (25) ou lesdits sont réalisées en rotomoulage / moussage. Ce principe, peu énergivore et demandant des investissements faibles, permet de mouler des pièces corps creux étanches à l'air dans de grandes dimensions.

Les pièces creuses du module coque sont réalisées par un processus dit de rotomoulage. Le rotomoulage permet également de réaliser des pièces moussées quand pendant le cycle une trappe s'ouvre sur le moule en rotation pour libérer un mélange composé du même polymère et d'agent moussant. Cette trappe s'ouvre en libérant son mélange quand la peau de la pièce est déjà formée sur les parois du moule chaud

Une deuxième trappe permet de réaliser de la même manière une couche interne du même polymère et se reparti sur la surface de la mousse. Ladite coque avant (21), réalisée avec un seul et unique matériau, possède ainsi une peau extérieure (21a) formant la carrosserie, et une peau intérieure (21b) formant l'habitacle. Entre ces 2 peaux, on peut trouver de façon non limitative une paroi compacte extérieure de peau extérieure (21c), une paroi moussée de peau extérieure (21d), une paroi compacte intérieure de peau extérieure (21e), un espace vide (21f), une paroi compacte intérieure de peau intérieure (21g), une paroi moussée de peau intérieure (21h) et une paroi compacte extérieure de peau intérieure (21i). Le contrôle de la température du moule de ladite coque avant (21) permet de définir l'épaisseur de chacune de ces parois et de réaliser des épaisseurs différentes dans la paroi d'une même pièce. Ainsi, en cas de choc, certaines zones, rigides, serviront à rediriger l'énergie du choc vers des absorbeurs, alors que d'autres, plus fines et déformables, serviront à absorber une partie de cette énergie. Un nid d'abeille (21j) aux parois fines est à cet effet intégré aux géométries de la coque avant (21) afin de d'absorber de l'énergie en cas de crash avant. Des piliers (A 21k) aux parois épaisses permettent quant à eux d'obtenir un habitacle rigide assurant une bonne sécurité aux passagers en cas de retournement du véhicule. Le principe de corps creux fermé sur un volume d'air défini permet d'obtenir des parois possédant un grand moment d'inertie et d'amortir au mieux les chocs à la manière d'un ballon. Ceci assure une sécurité optimum aux passagers du véhicule en cas de collision. Ceci permet également d'obtenir des parois extérieures élastiques, donc déformables mais capables de supporter les chocs de parking ou à basse vitesse sans dégradation ni déformation permanente. La carrosserie ainsi conçue est peu sensible aux chocs de parkings. Selon un mode de réalisation non limitatif, lesdits espaces vides (21f) peuvent être rendus étanches afin de confiner un volume d'air à l'intérieur. Ladite coque avant (21) devient ainsi plus rigide, ses parois étant précontraintes. Selon un autre mode de réalisation non limitatif, lesdits espaces vides (21f) peuvent être étanches et les volumes d'air mis sous pression afin d'augmenter encore la rigidité de la pièce coque avant (21), mais aussi sur toutes les pièces de (20).

Des capteurs (40) seront disposés à cet effet sur la périphérie des pièces creuses de (20). Le capteur (40) donnera la vitesse de rapprochement de l'obstacle et donnera l'ordre à une micro pompe de monter et moduler la pression dans la pièce de carrosserie vers laquelle se dirige l'obstacle. Quand le faisceau du capteur détecte une grosse masse, une certaine pression sera envoyée dans la pièce, qui sera différente si la masse détectée est faible, comme par exemple pour un piéton ou un animal.

Cette pression peut être modulée en fonction de ce que le capteur de collision (40) identifie comme imminent, et en fonction de la taille de l'obstacle (piéton, camion, mur)

Dans un cas favorable, l'ensemble des pièces de (20, 21, 22, 23, 24) seront équipés de ce système de sécurité. Ce système sera indépendant pneumatiquement sur chacune des pièces et la pression pourra être différente d'une pièce à l'autre. Une micro pompe et une valve anti retour sera favorablement utilisée pour augmenter la pression des corps creux juste avant une collision.

Les portes roto-moussées (24) de ladite coque (20) sont conçues et produites sur le même principe, corps creux présentant une peau extérieure, puis moussage à l'intérieur.

Les ouvrants comme les battants de porte latéraux (24) sont conçus en corps creux moussés d'une seule pièce. Ils sont conçus en forme de voutes encastrés sur tous les coté quand la porte est fermée, de telle manière à venir se comprimer sur le bas du châssis (22) et sur les autres pièces composants le module (21) et (22) en cas de crash latéral. Ce battant de porte conçue de façon monolithique, a possède le système de capteur gonflage permet une sécurité nouvelle en choc latéral.

Le rotomoulage et le roto- moussage permettent de réaliser des pièces de grande taille creuse. Ainsi, sur une seule pièce, on peut intégrer un grand nombre de fonctions. Ladite coque avant (21) intègre par exemple un nid d'abeille (21j), des piliers A (21k), des fixations (21I ) pour ledit châssis (10), des fixations (21m) pour ladite coque arrière (22), un logement (21n) pour les charnières desdites parties supérieures de portes (23), des fixations (21o) pour planche de bord (25), un point d'ancrage (21p) pour lesdits rétroviseurs (26), un logement (21q) pour lesdits optiques (27), un logement (21r) pour ledit essuie-glace (28), des logements (21s) pour lesdites vitres (29), des garde-boue (21t), etc... Ceci permet de diminuer le nombre de pièces constituant le module (20), et donc de réduire les coûts d'investissement pour la production et le montage des pièces

La couleur des pièces roto-moulées-moussées est réalisée par des colorants ajoutés au polymère de base naturelle avant sa mise en forme. La couleur est celle du polymère en poudre versé dans le moule au départ, et on parle de coloration dans la masse de la pièce. De ce fait, aucune post opération de peinture, de cataphorèse n'est nécessaire après fabrication. Le polymère n'étant pas sensible à l'humidité, aucun traitement anticorrosion ne doit être appliqué non plus. Ainsi, la production de ces pièces est plus écologique, plus rapide, et simplifie encore la chaîne de montage. L'utilisation de polymères roto-moulés-moussés rend également possible la production de pièces translucides diffusant la lumière. On peut ainsi placer de façon favorable des LEDs dans ledit espace vide (21f) de ladite coque avant (21) ou dans toute autre pièce composant (20) afin de rétroéclairer celle-ci pour lui donner une couleur par diffusion. En réalisant dans ladite coque (20) des parties opaques et des parties translucides, on peut également utiliser ce rétro-éclairage comme signalisation afin d'apporter une sécurité supplémentaire aux passagers ou aux piétons.

Ledit châssis (10) réalise toute la fonction structurelle du véhicule et assure la rigidité du véhicule et son bon comportement routier. Il reprend tous les efforts liés aux suspensions. Ceci permet d'avoir une grande liberté de design sur ladite coque (20). On peut ainsi dessiner et produire des coques de types différents coupé cabriolet (41), pick-up (42), fourgonnette etc... pouvant facilement s'adapter sur ledit châssis (10). Les coûts de développement et investissements sont réduit au module de coque, le châssis étant conservé

Ledit châssis (10) structurel permet également de réaliser des fixations simples entre ledit châssis (10) et ladite coque (20). De ce fait, ladite coque (20) peut être facilement remplacée, permettant à l'utilisateur de changer de couleur et de type de coque à son gré sans coûts importants. L'ancienne pièce de coque est démontée, identifiée et part dans un circuit de recyclage, conçu pour pouvoir mouler à nouveau la même pièce ou même fonction ou toutes autres pièces.

Ledit châssis (10) de par sa rigidité structurelle permet enfin d'utiliser des polymères possédant une faible masse volumique pour produire ladite coque (20). La masse de ladite coque (20) est donc faible, ce qui diminue la consommation énergétique de la voiture en roulage, apportant des avantages écologiques et économiques à l'utilisateur. La masse véhicule sans batterie (20) est réduite à 1/ 3 par rapport à celle d'un véhicule a châssis coque métal de dimensions identiques La masse est réduite grâce au rotomoulage qui permet de réaliser des corps creux, grâce au roto moussage qui permet de réaliser certaines parties en matériaux moussés, grâce au scellement étanche desdits espaces vides (21f ) qui apporte une plus grande rigidité aux pièces, et grâce à la mise sous pression desdits espaces vides (21f )

Les trois modules constituant le châssis, celui de propulsion (12), le module arrière (13), le module plateforme batterie (11), et le module habitacle coque (20), forment quatre modules distincts qui peuvent être fabriqués, assemblées et contrôlés dans différentes usines sous-traitantes. Ces ensembles sont envoyés à des centres d'assemblage de véhicule proche des mégapoles et des utilisateurs. Les centres d'assemblages nécessitent peu de moyens industriels et l'ensemble permet de limiter les transports de véhicules finis et diminue les investissements nécessaires à la fabrication d'un véhicule. Dans la même mesure l'invention permet de diminuer l'empreinte écologique à la fabrication.

Enfin, ce principe d'assemblage modulaire ouvre la porte à la fabrication rapide et dans de bonnes conditions économiques de véhicule sous licence puisque l'investissement final pour fabriquer le véhicule consiste en un hall d'assemblage et des outils standards

En fin de vie, la simplicité d'assemblage, le faible nombre de pièces, le peu de matériaux différents utilisés ainsi que leur nature, permet un recyclage quasi complet du véhicule. Les pièces peuvent être simplement démontées, identifiées, sans mélange de matériaux, identifiées, et envoyées à une station de recyclage. Ce principe, cumulé à des pièces de grands volumes, permet des boucles de recyclage économiquement viable et la notion de déchet n'existe plus puisqu' il devient matière première pour fabriquer un nouveau véhicule conformément aux traités sur l'économie circulaire ratifiés par l'Allemagne, la Chine, et la Confédération Helvétique. Ce concept de boucle de recyclage est le plus haut niveau de boucle appelé également concept « cradle to cradle ». Le véhicule ainsi conçu devient un vecteur de communication sur l'économie circulaire

## Revendications

1. Architecture de véhicule comprenant un châssis structurel rigide (10) de type plateforme; ladite architecture comprenant également un module coque indépendant (20) supporté par ledit châssis (10) et formant l'habitacle et la carrosserie du véhicule, ledit module coque étant réalisé par l'assemblage de pièces polymères en corps creux présentant des volumes fermés, lesdites pièces étant assemblées au châssis et agencées de telle manière à réaliser une protection autour des passagers du véhicule, le châssis structurel rigide étant constitué de trois modules distincts (11, 12, 13) qui assemblés ensemble reprennent tous les efforts routiers du véhicule et assurent sa propulsion, lesdits modules comprenant un module avant (12), une plateforme centrale (11) et un module arrière (13), ledit module avant comprenant au moins un moteur électrique, une transmission et des éléments de direction **caractérisée en ce que** ladite architecture comprend au moins deux configurations, une première configuration dans laquelle le module arrière (13) est formé d'éléments de suspension (15) et d'éléments de liaison au sol (16) et une deuxième configuration dans laquelle le module arrière est formé d'un module avant (12') modifié par suppression des éléments de direction, la première configuration ayant 2 roues motrices à l'avant et la deuxième configuration ayant 4 roues motrices.

2. Architecture de véhicule selon la revendication 1, **caractérisée en ce que** ledit module coque (20) comprend des piliers (A 21k) aux parois épaisses rigidifiant l'habitacle pour assurer une bonne sécurité aux passagers en cas de retournement dudit véhicule.

3. Architecture de véhicule selon l'une des revendications précédentes, **caractérisée en ce que** lesdits modules (11, 12, 13, 20) sont indépendant les uns des autres et peu volumineux.

4. Architecture de véhicule selon l'une des revendication 1 à 3, **caractérisée en ce que** l'on peut changer simplement et rapidement de coque sur un véhicule déjà assemblé, permettant ainsi à l'utilisateur de changer de couleur et/ou de type de coque ; la fixation de la coque étant réalisée par des moyens de fixation tel que des boulons permettant un montage et un démontage rapide de la coque.

5. Architecture de véhicule selon l'une des revendications précédentes, **caractérisé en ce que** lesdites pièces (21,22, 23, 24) formant la coque (20) sont fabriquée par roto moulage moussé en un seul cycle de transformation et un seul et même polymère.

6. Architecture de véhicule selon l'une des revendications précédentes, **caractérisée en ce que** lesdites pièces (21,22, 23, 24) formant la coque (20) sont constituées d'un unique matériau polymère.

7. Architecture de véhicule selon la revendication 6 **caractérisé en ce que** ledit matériau polymère constituant lesdites pièces est un bio-polymère, partiellement ou complètement issu de ressources renouvelables.

8. Architecture de véhicule selon la revendication 7, **caractérisée en ce que** ledit bio-polymère constituant lesdites pièces principales dudit module coque (20) est un acide polylactique (PLA).

9. Architecture de véhicule selon l'une des revendications 6, 7 ou 8, **caractérisée en ce que** ledit matériau polymère constituant lesdites pièces dudit module de coque (20) est recyclable.

10. Architecture de véhicule selon l'une des revendications précédentes, **caractérisée en ce que** lesdites pièces (21,22, 23, 24) formant le module coque (20) sont fabriquées par roto moulage moussé et comprennent des zones compactes et des zones moussées, lesdites zones comprenant des parois d'épaisseurs différentes configurées pour absorber différentiellement l'énergie en cas de choc dans lesdites pièces (21,22, 23, 24).

11. Architecture de véhicule selon la revendication 10, **caractérisée en ce que** les éléments d'absorption d'énergie sont des nids d'abeille (21j) intégrés à la coque avant (21).

12. Architecture de véhicule selon l'une des revendications précédentes, **caractérisé en ce que** les corps creux étanches peuvent être gonflés par un fluide, la pression interne des pièces pouvant être modulée par une pompe quelques instants avant et pendant l'impact lors d'un accident du véhicule.

13. Architecture de véhicule selon la revendication précédente, **caractérisé en ce que** les corps creux sont mis sous pression, augmentant la rigidité desdites pièces (21, 22, 23, 24) avant un choc.

14. Architecture de véhicule selon l'une des revendications 12 ou 13, **caractérisé en ce que** les corps creux des pièces (21,22, 23, 24) forment un volume fermé, étanche a l'air, dissipant l'énergie de choc par diffusion a toute la surface interne de la pièce, l'énergie de choc étant dissipée par l'élasticité du polymère et de la structure en couches des pièces (21,22, 23, 24).

## Patentansprüche

1. Fahrzeugarchitektur, umfassend ein starres plattformartiges strukturelles Fahrgestell (10); wobei die Architektur ferner ein unabhängiges Schalenmodul (20) umfasst, das vom Fahrgestell (10) getragen wird und den Fahrgastraum und die Karosserie des Fahrzeugs bildet, wobei das Schalenmodul durch die Verbindung von Polymerteilen zu Hohlkörpern mit geschlossenen Volumina gebildet ist, wobei die Teile mit dem Fahrgestell verbunden und so angeordnet sind, dass sie einen Schutz um die Insassen des Fahrzeugs herum bilden, wobei der starre Strukturrahmen aus drei verschiedenen Modulen (11, 12, 13) gebildet ist, die miteinander verbunden alle Straßenkräfte des Fahrzeugs aufnehmen und seinen Antrieb gewährleisten, wobei die Module ein vorderes Modul (12), eine mittlere Plattform (11) und ein hinteres Modul (13) umfassen, wobei das vordere Modul mindestens einen Elektromotor, ein Getriebe und Lenkelemente umfasst, **dadurch gekennzeichnet, dass** die Architektur mindestens zwei Konfigurationen umfasst, eine erste Konfiguration, in der das hintere Modul (13) aus Aufhängungselementen (15) und Bodenverbindungselementen (16) gebildet ist, und eine zweite Konfiguration, in der das hintere Modul aus einem vorderen Modul (12') gebildet ist, das durch Weglassen der Lenkelemente modifiziert ist, wobei die erste Konfiguration zwei vordere Antriebsräder aufweist und die zweite Konfiguration vier Antriebsräder aufweist.

2. Fahrzeugarchitektur nach Anspruch 1, **dadurch gekennzeichnet, dass** das Schalenmodul (20) Säulen (A21k) mit dicken Wänden umfasst, die den Fahrgastraum versteifen, um eine gute Sicherheit für die Insassen im Falle eines Überschlags des Fahrzeugs zu gewährleisten.

3. Fahrzeugarchitektur nach einem der vorangehenden Ansprüche, **dadurch gekennzeichnet, dass** die Module (11, 12, 13, 20) unabhängig voneinander sind und wenig Volumen aufweisen.

4. Fahrzeugarchitektur nach einem der Ansprüche 1 bis 3, **dadurch gekennzeichnet, dass** sich die Schale an einem bereits zusammengebauten Fahrzeug einfach und schnell wechseln lässt, wodurch der Benutzer die Farbe und/oder die Art der Schale ändern kann; wobei die Befestigung der Schale mit Hilfe von Befestigungsmitteln wie Bolzen erfolgt, die eine schnelle Montage und Demontage der Schale ermöglichen.

5. Fahrzeugarchitektur nach einem der vorangehenden Ansprüche, **dadurch gekennzeichnet, dass** die Teile (21, 22, 23, 24), die die Schale (20) bilden, durch Schaumrotationsformen in einem einzigen Verarbeitungszyklus und aus ein und demselben Polymer hergestellt werden.

6. Fahrzeugarchitektur nach einem der vorangehenden Ansprüche, **dadurch gekennzeichnet, dass** die Teile (21, 22, 23, 24), die die Schale (20) bilden, aus einem einzigen Polymermaterial gebildet sind.

7. Fahrzeugarchitektur nach Anspruch 6 **dadurch gekennzeichnet, dass** das Polymermaterial, das die Teile bildet, ein Biopolymer ist, das teilweise oder vollständig aus erneuerbaren Rohstoffen stammt.

8. Fahrzeugarchitektur nach Anspruch 7, **dadurch gekennzeichnet, dass** das Biopolymer, das die Hauptteile des Schalenmoduls (20) bildet, eine Polymilchsäure (PLA) ist.

9. Fahrzeugarchitektur nach einem der Ansprüche 6, 7 oder 8, **dadurch gekennzeichnet, dass** das Polymermaterial, das die Teile des Schalenmoduls (20) bildet, wiederverwertbar ist.

10. Fahrzeugarchitektur nach einem der vorangehenden Ansprüche, **dadurch gekennzeichnet, dass** die Teile (21, 22, 23, 24), die das Schalenmodul (20) bilden, durch Schaumrotationsformen hergestellt werden und kompakte Bereiche und Schaumbereiche umfassen, wobei die Bereiche Wände unterschiedlicher Dicke umfassen, die so konfiguriert sind, dass sie im Falle eines Aufpralls Energie in den Teilen (21, 22, 23, 24) differenziell absorbieren.

11. Fahrzeugarchitektur nach Anspruch 10, **dadurch gekennzeichnet, dass** die energieabsorbierenden Elemente Waben (21j) sind, die in die vordere Schale (21) integriert sind.

12. Fahrzeugarchitektur nach einem der vorangehenden Ansprüche, **dadurch gekennzeichnet, dass** die dichten Hohlkörper mit einem Fluid aufgeblasen werden können, wobei der Innendruck der Teile bei einem Unfall einige Augenblicke im Vorfeld und während eines Aufpralls moduliert werden kann.

13. Fahrzeugarchitektur nach dem vorangehenden Anspruch, **dadurch gekennzeichnet, dass** die Hohlkörper unter Druck gesetzt werden, wodurch die Steifigkeit der Teile (21, 22, 23, 24) im Vorfeld eines Aufpralls erhöht wird.

14. Fahrzeugarchitektur nach einem der Ansprüche 12 oder 13, **dadurch gekennzeichnet, dass** die Hohlkörper der Teile (21, 22, 23, 24) ein geschlossenes luftdichtes Volumen bilden, das die Aufprallenergie durch Diffusion über die gesamte Innenfläche des Teiles ableitet, wobei die Aufprallenergie durch die Elastizität des Polymers und die Schichtstruktur der Teile (21, 22, 23, 24) abgeleitet wird.

## Claims

1. Vehicle architecture comprising a rigid structural chassis (10) of platform type; said architecture also comprising an independent shell module (20) supported by said chassis (10) and forming the cabin and the body of the vehicle, said shell module being produced by the assembly of polymer parts in the form of hollow bodies having closed volumes, said parts being assembled to the chassis and arranged in such a way as to produce a protection around the passengers of the vehicle, the rigid structural chassis consisting of three separate modules (11, 12, 13) which, once assembled together, take up all the road forces of the vehicle and serve for the propulsion thereof, said modules comprising a front module (12), a central platform (11) and a rear module (13), said front module comprising at least an electric motor, a transmission and steering elements, **characterized in that** said architecture comprises at least two configurations, a first configuration in which the rear module (13) is formed by suspension elements (15) and by ground-contact elements (16), and a second configuration in which the rear module is formed by a front module (12') modified by eliminating the steering elements, the first configuration having 2 drive wheels at the front and the second configuration having 4 drive wheels.

2. Vehicle architecture according to Claim 1, **characterized in that** said shell module (20) comprises pillars (A 21k) with thick walls stiffening the cabin to ensure good passenger safety in the event of rollover of said vehicle.

3. Vehicle architecture according to either of the preceding claims, **characterized in that** said modules (11, 12, 13, 20) are independent of one another and of low volume.

4. Vehicle architecture according to one of Claims 1 to 3, **characterized in that** it is possible to simply and rapidly change a shell on an already assembled vehicle, thus allowing the user to change the colour and/or type of shell; the shell being fastened by fastening means such as bolts allowing quick mounting and demounting of the shell.

5. Vehicle architecture according to one of the preceding claims, **characterized in that** said parts (21, 22, 23, 24) forming the shell (20) are manufactured by rotational foam moulding in a single transformation cycle and from one and the same polymer.

6. Vehicle architecture according to one of the preceding claims, **characterized in that** said parts (21, 22, 23, 24) forming the shell (20) consist of a single polymer material.

7. Vehicle architecture according to Claim 6, **characterized in that** said polymer material constituting said parts is a biopolymer partially or completely obtained from renewable resources.

8. Vehicle architecture according to Claim 7, **characterized in that** said biopolymer constituting said main parts of said shell module (20) is a polylactic acid (PLA) .

9. Vehicle architecture according to one of Claims 6, 7 and 8, **characterized in that** said polymer material constituting said parts of said shell module (20) is recyclable.

10. Vehicle architecture according to one of the preceding claims, **characterized in that** said parts (21, 22, 23, 24) forming the shell module (20) are manufactured by rotational foam moulding and comprise compact regions and foamed regions, said regions comprising walls of different thicknesses configured to differently absorb the energy in the event of impact in said parts (21, 22, 23, 24).

11. Vehicle architecture according to Claim 10, **characterized in that** the energy-absorption elements are honeycombs (21j) integrated into the front shell (21).

12. Vehicle architecture according to one of the preceding claims, **characterized in that** the leaktight hollow bodies can be inflated by a fluid, the internal pressure of the parts being able to be modulated by a pump a few moments before and during impact in the event of an accident of the vehicle.

13. Vehicle architecture according to the preceding claim, **characterized in that** the hollow bodies are pressurized, increasing the rigidity of said parts (21, 22, 23, 24) before an impact.

14. Vehicle architecture according to either of Claims 12 and 13, **characterized in that** the hollow bodies of the parts (21, 22, 23, 24) form an airtight, closed volume dissipating the impact energy by diffusion to the whole of the internal surface of the part, the impact energy being dissipated by the elasticity of the polymer and of the layered structure of the parts (21, 22, 23, 24).
